# EUROPEAN PATENT SPECIFICATION

(11) **EP 4 407 158 B1**
(45) Date of publication and mention of the grant of the patent: **14.01.2026**
(21) Application number: 24182311.1
(22) Date of filing: 18.05.2023
(51) Int. Cl.: F02C 7/32, F02C 7/36, F01D 15/10, F02C 3/107

(54) **SYSTEMS AND METHODS OF DUAL-SPOOL POWER MANAGEMENT**
SYSTEME UND VERFAHREN ZUR LEISTUNGSREGELUNG MIT DOPPELTWELLENKONFIGURATION
SYSTÈMES ET PROCÉDÉS DE GESTION DE PUISSANCE À DOUBLE ARBRE

(30) Priority: 19.05.2022 US 202217749009
(43) Date of publication of application: 31.07.2024
(62) Divisional of application: 23174188.5
(73) Proprietor: RTX Corporation, Farmington, CT 06032 (US)
(72) Inventor: HANRAHAN, Paul R., Sedona (US); KUPRATIS, Daniel B., Wallingford (US); CHANG, Jui-Lin, Glastonbury (US)
(74) Representative: Dehns

(56) References cited:
- EP-A1- 3 690 214
- EP-A1- 3 693 578
- US-A1- 2020 386 188

## Description

### FIELD

The present invention relates generally to gas turbine engines and, more specifically, to systems and methods for dual spool power generation and extraction.

### BACKGROUND

A gas turbine engine typically includes a fan section, a compressor section, a combustor section, and a turbine section. During operation, air is pressurized in the compressor section and mixed with fuel and burned in the combustor section to generate hot combustion gases. The hot combustion gases are then communicated through the turbine section, where energy is extracted from the hot combustion gases to power the compressor section, the fan section or various other loads developed within or outside the gas turbine engine

Spools are typically used to connect components of the turbine section with components of the compressor section and the fan section. For example, a low speed spool generally includes an inner shaft that interconnects a fan, a low pressure compressor and a low pressure turbine. The inner shaft may be connected to the fan through a speed change mechanism to drive the fan at a lower speed than that of the low speed spool. A high speed spool generally includes an outer shaft that interconnects a high pressure compressor and a high pressure turbine. The inner shaft and the outer shaft are typically concentric with respect to one another and rotate via bearing systems about a central longitudinal axis, which is collinear with longitudinal axes of both the low and high speed spools.

Increasing engine bypass ratios and/or the electrical needs of an aircraft tend to increase demand on the engine's compressor section to perform under increased loading. For example, increased power demands can be detrimental to engine performance as increased power is typically associated with increased operating temperatures and/or greater operating perturbation due to large swings in power demand.

EP 3690214 A1 discloses a turbofan engine that includes a first spool including a first turbine, and a first tower shaft engaged to the first spool. A second spool includes a second turbine, and a second tower shaft is engaged to the second spool. A first load on the first spool and a second load on the second spool are adjusted by operation of at least one of an inner electric motor and an outer electric motor.

### SUMMARY

According to a first aspect of the invention, a power extraction system for a gas turbine engine, is provided as recited in claim 1.

Further, optional features are provided as recited in claims 2 to 7.

According to a further aspect of the invention, an article of manufacture is provided as recited in claim 8.

Further, optional features are provided as recited in claims 9 and 10.

According to a further aspect of the invention, a method of controlling a power extraction system of a gas turbine engine is provided as recited in claim 11.

Further, optional features are provided as recited in claims 12 to 15.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present invention is particularly pointed out and distinctly claimed in the concluding portion of the specification. A more complete understanding of the present invention, however, may best be obtained by referring to the detailed description and claims when considered in connection with the figures, wherein like numerals denote like elements.
FIG. 1 illustrates a schematic view of an exemplary gas turbine engine, in accordance with various embodiments;
FIG. 2 illustrates a schematic view of a dual spool power extraction system for a gas turbine engine, in accordance with various embodiments; and
FIG. 3 illustrates a method for controlling a dual spool power extraction system for a gas turbine engine, in accordance with various embodiments.

### DETAILED DESCRIPTION

The detailed description of various embodiments herein makes reference to the accompanying drawings, which show various embodiments by way of illustration. While these various embodiments are described in sufficient detail to enable those skilled in the art to practice the invention, it should be understood that other embodiments may be realized and that logical, chemical, electro-magnetic, and mechanical changes may be made without departing from the scope of the invention. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact.

Cross hatching lines may be used throughout the figures to denote different parts but not necessarily to denote the same or different materials. Throughout the present disclosure, like reference numbers denote like elements. Accordingly, elements with like element numbering may be shown in the figures, but may not necessarily be repeated herein for the sake of clarity.

A first component that is "radially outward" of a second component means that the first component is positioned a greater distance away from a common axis of the first and second components as compared to the second component. A first component that is "radially inward" of a second component means that the first component is positioned closer to a common axis of the first and second components than the second component.

Dual-Spool power management systems of the present invention may include a low spool transmission configured to transfer torque between a low speed spool of a gas turbine engine and a low spool motor-generator and a high spool transmission configured to transfer torque between a high speed spool of the gas turbine engine and a high spool motor-generator. **In** various embodiments, a controller is operationally coupled to the low spool motor-generator and the high spool motor-generator. The controller is configured to manage, on the basis of operating demands and engine and/or flight conditions, the power output by the motor-generators. For example, in response to certain operating conditions (e.g., in response to a snap acceleration and/or when operating at cruise), the controller causes the power output by the low spool motor-generator to be employed as a power input of the high spool motor-generator, and in response to other operating conditions (e.g., at increased inlet temperatures), the controller causes the power output by the high spool motor-generator to be employed as a power input of the low spool motor-generator. In this regard, the dual-spool power generation-extraction systems disclosed herein may combine (or "sum") the power output by the high spool motor-generator and the low spool motor-generator during peak power demand, and also direct (or "push") power between spools during off-peak demand to improve efficiency and/or increase thrust, while reducing idle thrust and idle exhaust temperatures, and/or decreasing or increasing low spool and/or high spool speed which tends to increase a compressor stall margin of the low spool and/or high spool.

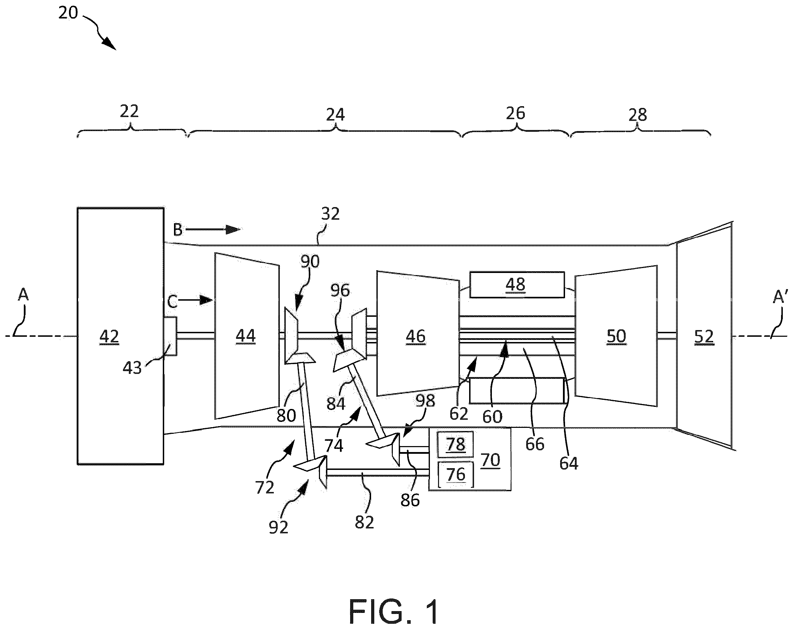

Referring now to the drawings, FIG. 1, schematically illustrates a gas turbine engine 20, in accordance with various embodiments. The gas turbine engine 20 is disclosed herein as a two-spool turbofan engine that generally incorporates a fan section 22, a compressor section 24, a combustor section 26 and a turbine section 28. The fan section 22 drives air along a bypass flow path B, while the compressor section 24 drives air along a core flow path C for compression and communication into the combustor section 26 and then expansion through the turbine section 28. The core flow path C is generally ducted through a core duct, which may be defined by the compressor, combustor and turbine sections, radially inward of the core engine case 32. Although gas turbine engine 20 is depicted as a turbofan gas turbine engine herein, it should be understood that the concepts described herein are not limited to use with turbofans and the teachings may be applied to other types of turbine engines including multi-spool architectures, as well as industrial gas turbines and marine gas turbines.

Fan section 22, compressor section 24, combustor section 26, and turbine section 28 are arranged sequentially along an engine central longitudinal axis A-A'. The fan section 22 includes a fan 42, the compressor section 24 includes a low pressure compressor 44 and a high pressure compressor 46, the combustor section 26 includes a combustor 48, and the turbine section 28 includes a high pressure turbine 50 and a low pressure turbine 52. Gas turbine engine 20 comprises a low speed spool 60 and a high speed spool 62 mounted for rotation about engine central longitudinal axis A-A'. Low speed spool 60 comprises an inner shaft 64 that interconnects fan 42, low pressure compressor 44, and a low pressure turbine 52. Inner shaft 64 may be connected to fan 42 through a geared architecture 43 that can drive fan 42 at a lower speed than inner shaft 64. High speed spool 62 may comprise an outer shaft 66 that interconnects high pressure compressor 46 and high pressure turbine 50. Inner shaft 64 and outer shaft 66 may be concentric and may rotate via bearing systems about the engine central longitudinal axis A-A', which is collinear with the longitudinal axes of inner shaft 64 and outer shaft 66. As used herein, a "high pressure" compressor or turbine experiences a higher pressure than a corresponding "low pressure" compressor or turbine.

In general, air in the core flow path C is compressed by the low pressure compressor 44 and the high pressure compressor 46, mixed and burned with fuel in the combustor 48, and then expanded over the high pressure turbine 50 and the low pressure turbine 52, with the high pressure turbine 50 being configured to drive high speed spool 62 and the low pressure turbine 52 being configured to drive low speed spool 60 in response to the expansion.

Gas turbine engine 20 may also include an accessory gearbox 70, a low spool transmission 72, and a high spool transmission 74. In various embodiments, accessory gearbox 70 may be mounted to engine case 32 or other static structure of gas turbine engine 20. Low spool transmission 72 may be configured to mechanically couple and thereby transfer rotational energy (e.g., torque) between inner shaft 64 of low speed spool 60 and a low spool motor-generator 76 of accessory gearbox 70. High spool transmission 74 may be configured to mechanically couple and thereby transfer rotational energy (e.g., torque) between outer shaft 66 of high speed spool 62 and high spool motor-generator 78 of accessory gearbox 70.

In various embodiments, low spool transmission 72 may comprise a low tower shaft 80 and a low lay shaft 82. High spool transmission 74 may comprise a high tower shaft 84 and a high lay shaft 86. Low tower shaft 80 may extend between inner shaft 64 and low lay shaft 82. A first end of low tower shaft 80 may be mechanically coupled to a geared system 90 configured to transfer torque between inner shaft 64 and low tower shaft 80. A second end of low tower shaft 80 may be mechanically coupled to a geared system 92 configured to transfer torque between low tower shaft 80 and low lay shaft 82. In various embodiments, high spool transmission 74 may comprise a high tower shaft 84 and a high lay shaft 86. High tower shaft 84 may extend between outer shaft 66 and high lay shaft 86. A first end of high tower shaft 84 may be mechanically coupled to a geared system 96 configured to transfer torque between outer shaft 66 and high tower shaft 84. A second end of high tower shaft 84 may be mechanically coupled to a geared system 98 configured to transfer torque between high tower shaft 84 and high lay shaft 86. As described in further detail below, low lay shaft 82 forms the input shaft of a gear train coupled to low spool motor-generator 76 and high lay shaft 86 forms the input shaft of a gear train coupled to high spool motor-generator 78.

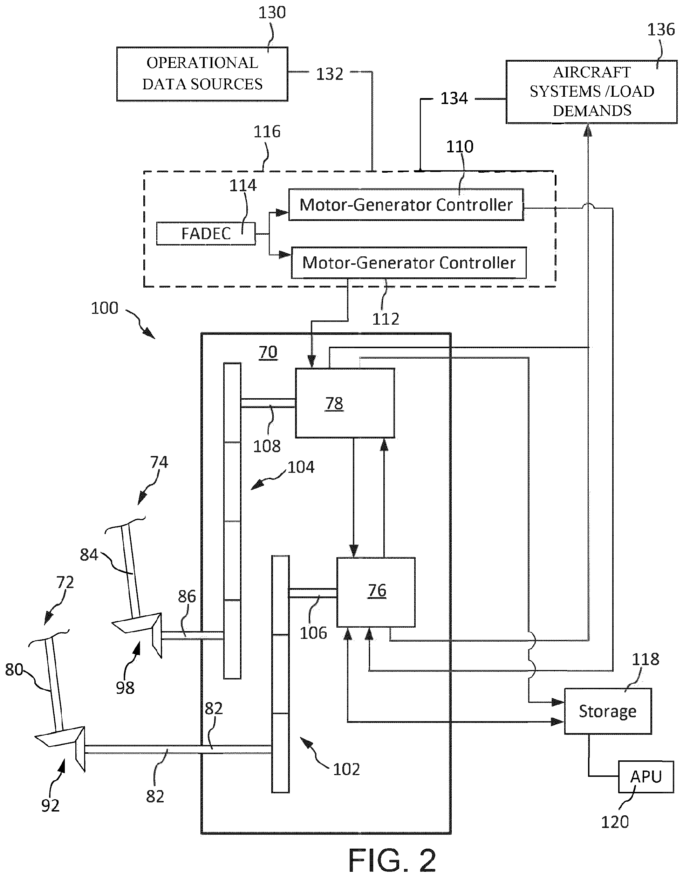

With additional reference to FIG. 2, a dual-spool power management system 100 (also referred to as a power extraction system) for gas turbine engine 20 is illustrated in accordance with various embodiments. In various embodiments, dual-spool power management system 100 may comprise low spool motor-generator 76 and high spool motor-generator 78. Low spool transmission 72 may be coupled to low spool motor-generator 76 via a first gear train 102. Low lay shaft 82 may be rotationally coupled to first gear train 102. While a single accessory (i.e., low spool motor-generator 76) is illustrated as being driven by first gear train 102, it is further contemplated and understood that accessory gearbox 70 may include any number of accessories (e.g., fuel pump, oil pump, air turbine starter (ATS), accessory air compressor (AAC), permanent magnet alternator (PMA), etc.), which may be driven by first gear train 102. High spool transmission 74 may be coupled to high spool motor-generator 78 via a second gear train 104. High lay shaft 86 may be rotationally coupled to second gear train 104. While a single accessory (i.e., high spool motor-generator 78) is illustrated as being driven by second gear train 104, it is further contemplated and understood that accessory gearbox 70 may include any number of accessories (e.g., fuel pump, oil pump, ATS, AAC, PMA, etc.), which may be driven by second gear train 104.

First gear train 102 and second gear train 104 are configured such that low spool motor-generator 76 and high spool motor-generator 78 operate at approximately the same rotational speed. As used in the previous context "approximately" means ±5%. For example, a gear ratio of first gear train 102 is configured such that the input shaft 106 of low spool motor-generator 76 rotates within 5% of rotation of speed of the input shaft 108 of high spool motor-generator 78. Configuring low spool motor-generator 76 and high spool motor-generator 78 to rotate at approximately the same speed tends to reduce a size of the power electronics between low spool motor-generator 76 and high spool motor-generator 78 as the output voltage and/or current input and output by low spool motor-generator 76 and high spool motor-generator 78 will be approximately equal in amplitude.

Low spool motor-generator 76 and high spool motor-generator 78 are configured to input power to or extract power from low speed spool 60 and high speed spool 62 of gas turbine engine 20. Low spool motor-generator 76 is connected to and controlled by a first controller 110 and high spool motor-generator 78 is connected to and controlled by a second controller 112. In various embodiments, the first controller 110 and the second controller 112 are further controlled by a full authority digital electric controller or FADEC 114. While the first controller 110, the second controller 112 and the FADEC 114 are illustrated as individual components, the disclosure contemplates control of the low spool motor-generator 76 and high spool motor-generator 78 being accomplished by a controller 116, which may be considered to include combined functionalities of one or more of the first controller 110, the second controller 112 and the FADEC 114. In various embodiments, an energy storage device 118 is electrically coupled to low spool motor-generator 76 and high spool motor-generator 78. The energy storage device 118 may comprise, for example, a battery, a capacitor or any similar rechargeable energy storage component. In various embodiments, the energy storage device 118 may also comprise or be connected to an auxiliary source of power, such as, for example, an auxiliary power unit (APU) 120.

The controller 116 is configured to monitor and control operation of the low spool motor-generator 76 and high spool motor-generator 78 based on operational data 132 received from one or more operational data source(s) 130. Operational data source 130 may output operational data 132 correlating to operating parameters of gas turbine engine 20, operating parameters of an aircraft to which gas turbine engine 20 is attached, and/or to various flight parameters. Operational data source 130 may include one or more avionics units, flight management systems, sensors, automatic throttle systems, and/or other engine, APU, aircraft, and/or flight data sources. Stated differently, controller 116 may receive operational data 132 from one or more avionics units, flight management systems, sensors, automatic throttle systems, and/or other engine, APU, aircraft, and/or flight data sources. Controller 116 may receive flight and operating parameters of gas turbine engine 20 from operational data source 130. For example, controller 116 may receive operational data 132 correlating to an altitude, an aircraft speed, flight time, Mach number, a rotational speed (N1) of low speed spool 60 (FIG. 1), a rotational speed (N2) of high speed spool 62 (FIG. 1), fuel output, a fan inlet temperature, a compressor inlet temperature, a compressor outlet temperature, a combustor outlet temperature, or any other engine or flight data. Operational data 132 may be sent to controller 116 as a voltage signal, a current signal, a digital signal, or any other suitable signal, whether filtered, conditioned, or otherwise preprocessed. Controller 116 may also receive power or load demands 134 for various aircraft systems 136.

In accordance with various embodiments, controller 116 is configured to determine whether to command to the motor-generators 76, 78 to drive the spool to which it is attached, to provide power to other aircraft system(s) 136, or to push power to the other of the motor-generators based on operational data 132. For example, in various embodiments, the low spool motor-generator 76 may be employed to increase (or maintain) the rotational speed of the low speed spool 60 by providing power to drive rotation of the low speed spool 60 *(i.e.,* the motor-generator is being used as a motor). In various embodiments, the low spool motor-generator 76 may also be employed to decrease (or maintain) the rotational speed of the low speed spool 30 by extracting power from the rotation of the low speed spool 60 *(i.e.,* the motor-generator is being used as a generator). Similarly, in various embodiments, the high spool motor-generator 78 may be employed to increase (or maintain) the rotational speed of high speed spool 62 by providing power to drive rotation of the high speed spool 62 (*i.e.,* the motor-generator is being used as a motor). In various embodiments, the high spool motor-generator 78 may also be employed to decrease (or maintain) the rotational speed of the high speed spool 62 by extracting power from the high speed spool 62 (*i.e.,* the motor-generator is being used as a generator).

In accordance with various embodiments, low spool motor-generator 76 is electrically connected to high spool motor-generator 78 and may be employed to push power to high spool motor-generator 78. In this regard, a power (e.g., voltage) output from low spool motor-generator 76 may be input into (i.e., received by) high spool motor-generator 78. The power received from low spool motor-generator 76 is employed to drive high spool motor-generator 78 to increase (or maintain) the rotational speed of high speed spool 62. Stated differently, low spool motor-generator 76 may operate in a generator-mode and output power to the high spool motor-generator 78 operating in a motor mode. High spool motor-generator 78 is electrically connected to low spool motor-generator 76 and may employed to push power to low spool motor-generator 76. In this regard, a power (e.g., voltage) output from high spool motor-generator 78 may be input into (i.e., received by) low spool motor-generator 76. The power received from high spool motor-generator 78 is employed to drive low spool motor-generator 76 to increase (or maintain) the rotational speed of low speed spool 60. Stated differently, high spool motor-generator 78 may operate in a generator-mode and output power to the low spool motor-generator 76 operating in a motor mode.

Controller 116 may determine whether to operate low spool motor-generator 76 and high spool motor-generator 78 both in motor mode, both in generator mode, one in generator mode and the other in motor mode, or in a push power mode based one or more the flight parameters and/or engine operating conditions (e.g., based on operational data 132 and load demands 134). For example, at an increased fan inlet temperature and/or a decreased ratio of the fan inlet temperature to the combustor outlet temperature, controller 116 may command high spool motor-generator 78 to push power to low spool motor-generator 76. In other words, controller 116 may command high spool motor-generator 78 to operate in generator mode and low spool motor-generator 76 to operate in motor mode. Controller 116 may also command or cause the power output by high spool motor-generator 78 to be input into low spool motor-generator 76. Controller 116 may determine to push power from high spool motor-generator 78 to low spool motor-generator 76 based on a flight condition (e.g., during take-off) or in response to an engine operating condition. For example, controller 116 may determine to push power from high spool motor-generator 78 to low spool motor-generator 76 in response to determining the fan inlet temperature is greater than or equal to a threshold inlet temperature. In various embodiments, controller 116 may determine to push power from high spool motor-generator 78 to low spool motor-generator 76 in response to determining a ratio of the fan inlet temperature to the combustor exit temperature is less than a threshold fan inlet temperature to the combustor exit temperature ratio. Pushing power from the high spool motor-generator 78 to the low spool motor-generator 76 may decrease the rotational speed (e.g., rotations per minute (RPM)) of the high speed spool 62 and high pressure compressor 46. Decreasing the rotational speed of high pressure compressor 46 tends to decrease an overall pressure ratio (OPR) of the compressor section 24 and/or a compressor temperature ratio. The compressor temperature ratio is a ratio of the temperature at the inlet of the compressor section 24 to the temperature at the outlet of the compressor section 24 (e.g., the temperature at the inlet of low pressure compressor 44 to the temperature at the outlet of the high pressure compressor 46). Pushing power from high spool motor-generator 78 to the low spool motor-generator 76 increases power to the fan section 22 (i.e., increases the rotational speed of the fan 42), thereby increasing thrust.

In various embodiments, controller 116 may be configured to command low spool motor-generator 76 to push power to high spool motor-generator 78 in response to receiving a "snap acceleration" request. For example, controller 116 may be configured to receive a throttle position signal and determine, based on the throttle position signal, how fast the throttle position is changing (e.g., the controller 116 determines the change in throttle position relative to time). Controller 116 may determine the throttle position signal is indicative of a snap acceleration in response to the determining the velocity of change in the throttle position is greater than a threshold throttle change velocity. In response to identifying a snap acceleration request, controller 116 may command low spool motor-generator 76 to push power to high spool motor-generator 78. In other words, controller 116 may command low spool motor-generator 76 to operate in generator mode and high spool motor-generator 78 to operate in motor mode. Controller 116 also commands/causes the power output by low spool motor-generator 76 to be input into high spool motor-generator 78. Pushing power from the low spool motor-generator 76 to the high spool motor-generator 78 increases the rotational speed of the high speed spool 62 and high pressure compressor 46. Using power from the low speed spool 60 to increase the rotational speed (N2) of the high speed spool 62 tends to increase N2 faster as compared to conventional engines. Additionally, using power from the low speed spool 60 to increase N2 may allow for decreased compressor stall margins, for example at higher altitude.

In various embodiments, controller 116 may be configured to switch between pushing power from the low spool motor-generator 76 to high spool motor-generator 78 during a snap acceleration, during take-off, or at any other preselected operating condition. In other words, controller 116 may be configured to continuously switch (i.e., alternate) between pushing power from the low spool motor-generator 76 to high spool motor-generator 78 and pushing power from the high spool motor-generator 78 to high spool motor-generator 78. Controller 116 may determine when to switch between pushing power from the low spool motor-generator 76 to high spool motor-generator 78 and pushing power from the high spool motor-generator 78 to low spool motor-generator 76 based on the compressor temperature ratio, the fan inlet temperature to combustor outlet temperature ratio, the N2 speed, the N1 speed, a voltage of low spool motor-generator 76, a voltage of high spool motor-generator 78, or any other desired engine operating condition.

Controller 116 may also determine to push power from low spool motor-generator 76 to high spool motor-generator 78 based on a flight condition (e.g., during cruise). For example, controller 116 may determine to push power from the low spool motor-generator 76 to the high spool motor-generator 78 in response to identifying a cruise condition. In various embodiments, controller 116 may be configured to identify a cruise, or steady state, condition by determining that one or more flight parameters (e.g., altitude, flight time, speed, etc.) is/are within a selected range for a selected period of time and/or by determining that one or more engine operating parameters (e.g., N1, N2, fan inlet temperature, etc.) is within a selected range for a selected period of time. For example, if controller 116 determines the altitude is within a selected altitude range for a selected length of time and the N2 is within a selected N2 range for a selected length of time, controller 116 may determine that gas turbine engine 20 is operating at a cruise condition. In response to identifying the cruise condition, controller 116 may command low spool motor-generator 76 to push power to high spool motor-generator 78. In other words, controller 116 may command low spool motor-generator 76 to operate in generator mode and high spool motor-generator 78 to operate in motor mode. Controller 116 may also cause (e.g., by outputting a command) the power output by low spool motor-generator 76 to be input into high spool motor-generator 78. Pushing power from the low spool motor-generator 76 to the high spool motor-generator 78 increases the rotational speed of the high speed spool 62 and high pressure compressor 46. Increasing the rotational speed of high pressure compressor 46 increases OPR. Increasing OPR via the low speed spool 60 tends to increase the efficiency of gas turbine engine 20.

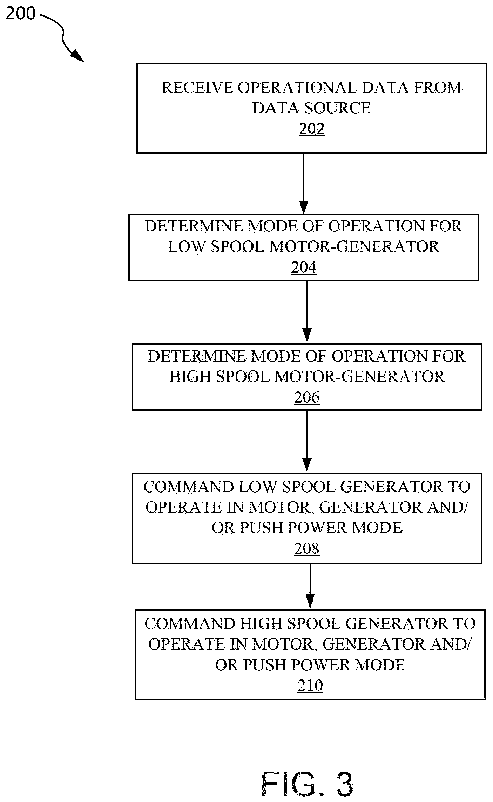

With reference to FIG. 3, a method 200 for controlling a power extraction system for a gas turbine engine is illustrated. In accordance with various embodiments, method 200 may be carried out by dual-spool power management system 100, as discussed above.

With combined referent to FIG. 3 and FIG. 2, method 200 comprises a controller 116, receiving operational data 132 from an operational data source 130 (step 202). Controller 116 determines whether to operate low spool motor-generator 76 in a generator mode or a motor mode and whether to push power from the low spool motor-generator 76 to high spool motor-generator 78 based on the operational data 132 (step 204). Controller 116 determines whether to operate high spool motor-generator 78 in generator mode or motor mode and whether to push power from the high spool motor-generator 78 to low spool motor-generator 76 based on the operational data 132 (step 206). Controller 116 commands low spool motor-generator 76 to operate in at least one of the motor mode, the generator mode, or the push power mode (step 208) and controller 116 commands high spool motor-generator 78 to operate in at least one of the motor mode, the generator mode, or the push power mode (step 210).

In various embodiments, step 202 may include controller 116 receiving a fan inlet temperature and step 204 may include controller 116 comparing the fan inlet temperature to a threshold fan inlet temperature. Controller 116 may be configured to command the high spool motor-generator to operate in the push power mode in response to determining the fan inlet temperature is greater than the threshold fan inlet temperature.

In various embodiments, step 202 may include controller 116 receiving the fan inlet temperature and a combustor outlet temperature, and step 204 may include controller 116 comparing a ratio of the fan inlet temperature to the combustor outlet temperature to a threshold fan-inlet-temperature-to-combustor-outlet-temperature ratio. Controller 116 may be configured to command the high spool motor-generator to operate in the push power mode in response to determining the ratio of the fan inlet temperature to the combustor outlet temperature is less than the threshold fan-inlet-temperature-to-combustor-outlet-temperature ratio.

Step 202 includes controller 116 receiving a throttle position signal, and step 206 includes controller 116 comparing, a velocity of a change in throttle position to a threshold throttle change velocity. Controller 116 is configured to command the low spool motor-generator 76 to operate in the push power mode in response to determining the velocity of the change in throttle position is greater than the threshold throttle change velocity.

In various embodiments, step 206 may include controller 116 determining whether the gas turbine engine 20 is operating in a cruise condition Controller 116 may be is configured to command the low spool motor-generator 76 to operate in the push power mode in response to identifying that gas turbine engine 20 is operating in the cruise condition.

Step 202 includes controller 116 receiving a throttle position signal, and step 208 includes controller 116 comparing, a voltage of low spool motor-generator 76 and a voltage of the high spool motor-generator 78 to a threshold difference in voltage of low spool motor-generator 76 versus a voltage of the high spool motor-generator 78. Controller 116 is configured to command the low spool motor-generator 76 to operate in the push power mode in response to determining the difference in voltage of low spool motor-generator 76 versus a voltage of the high spool motor-generator 78 is greater than the threshold difference in voltage (i.e., is V_{low spool motor-generator} - V_{high} spool motor-generator > V_{threshold}?). Controller 116 is configured to command the high spool motor-generator 78 to operate in the push power mode in response to determining the difference in voltage of low spool motor-generator 76 versus a voltage of the high spool motor-generator 78 is less than negative of the threshold difference in voltage (i.e., is V_{low spool} motor-generator - V_{high spool} motor-generator < -V_{threshold}?).

In various embodiments, method 200 may further include controller 116 receiving load demand 134 from aircraft system 132. Method 200 may further include controller comparing the load demand to a threshold load. Controller may be configured to command both the low spool motor-generator 76 and the high spool motor-generator 78 to operate in the generator mode in response to determining the load demand is greater than the threshold load.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

## Claims

1. A power extraction system (100) for a gas turbine engine (20), comprising:
a low spool transmission (72);
a high spool transmission (74);
a low spool motor-generator (76) mechanically connected to the low spool transmission; and
a high spool motor-generator (78) mechanically connected to the high spool transmission and electrically connected to the low spool motor-generator;
a controller (116) configured to monitor and control operation of the low spool motor-generator and high spool motor-generator based on operational data (132) received from one or more operational data sources (130),
**characterised in that** the controller is configured to command the low spool motor-generator to push power to the high spool motor-generator in response to the velocity of change in the throttle position is greater than a threshold throttle change velocity; and/or
wherein the controller is configured to command the low spool motor-generator to operate in the push power mode in response to determining the difference in voltage of low spool motor-generator versus a voltage of the high spool motor-generator is greater than the threshold difference in voltage, and the controller is configured to command the high spool motor-generator to operate in the push power mode in response to determining the difference in voltage of low spool motor-generator versus a voltage of the high spool motor-generator is less than negative of the threshold difference in voltage.

2. The power extraction system (100) of claim 1, wherein the low spool motor-generator (76) is configured to output power generated by rotation of the low spool transmission (72) into the high spool motor-generator (78).

3. The power extraction system (100) of claim 1 or 2, wherein the high spool motor-generator (78) is configured to output power generated by rotation of the high spool transmission (74) into the low spool motor-generator (76).

4. The power extraction system (100) of any preceding claim, wherein the controller (116) is configured to command the high spool motor-generator (78) to push power to the low spool motor-generator (76) in response to at least one of a fan inlet temperature being greater than a threshold inlet temperature or a ratio of the fan inlet temperature to a combustor outlet temperature being less than a threshold fan-inlet-temperature-to-combustor-outlet-temperature ratio.

5. The power extraction system (100) of any preceding claim, wherein the controller (116) is configured to determine whether to command the low spool motor-generator (76) to push power to the high spool motor-generator (78) based on operational data (132) received from an operational data source (130).

6. The power extraction system (100) of any preceding claim, wherein the controller (116) is configured to command the low spool motor-generator (76) to push power to the high spool motor-generator (78) in response to identifying a cruise condition.

7. The power extraction system (100) of any preceding claim, further comprising:
a first gear train (102) rotationally coupled between the low spool transmission (72) and the low spool motor-generator (76); and
a second gear train (104) rotationally coupled between the high spool transmission (74) and the high spool motor-generator (78).

8. An article of manufacture including a tangible, non-transitory computer-readable storage medium having instructions stored thereon for controlling a power extraction system (100) of a gas turbine engine (20) and that, in response to execution by a controller (116), cause the controller to perform operations comprising:
receiving, by the controller, operational data (132) from an operational data source (130);
determining, by the controller, whether to operate a low spool motor-generator (76) in a generator mode or a motor mode and whether to push power from the low spool motor-generator to a high spool motor-generator (78) based on the operational data;
determining, by the controller, whether to operate the high spool motor-generator in the generator mode or the motor mode and whether to push power from the high spool motor-generator to the low spool motor-generator based on the operational data;
commanding, by the controller, the low spool motor-generator to operate in at least one of the motor mode, the generator mode, or a push power mode; and
commanding, by the controller, the high spool motor-generator to operate in at least one of the motor mode, the generator mode, or the push power mode,
**characterised in that** receiving, by the controller, the operational data from the operational data source comprises receiving, by the controller, a throttle position signal; and
wherein determining, by the controller, whether to push power from the low spool motor-generator to the high spool motor-generator comprises at least one of:
comparing, by the controller, a velocity of a change in throttle position to a threshold throttle change velocity, wherein the controller is configured to command the low spool motor-generator to operate in the push power mode in response to determining the velocity of the change in throttle position is greater than the threshold throttle change velocity; or
comparing, by the controller, a difference between a voltage of the low spool motor-generator and a voltage of the high spool motor-generator to a threshold voltage difference, wherein the controller is configured to command the low spool motor-generator to operate in the push power mode in response to determining the difference between the voltage of the low spool motor-generator and the voltage of the high spool motor-generator is greater than the threshold voltage difference, and the controller is configured to command the high spool motor-generator to operate in the push power mode in response to determining the difference between the voltage of the low spool motor-generator and the voltage of the high spool motor-generator is less than negative of the threshold voltage difference.

9. The article of claim 8, wherein determining, by the controller (116), whether to push power from the low spool motor-generator (76) to the high spool motor-generator (78) comprises determining, by the controller, whether the gas turbine engine (20) is operating in a cruise condition, and wherein the controller is configured to command the low spool motor-generator to operate in the push power mode in response to identifying the cruise condition.

10. The article of claim 8 or 9, wherein the operations further comprise:
receiving, by the controller (116), a load demand from an aircraft system; and
comparing, by the controller, the load demand to a threshold load, wherein the controller is configured to command both the low spool motor-generator (76) and the high spool motor-generator (78) to operate in the generator mode in response to determining the load demand is greater than the threshold load.

11. A method (200) of controlling a power extraction system (100) of a gas turbine engine (20), comprising:
receiving, by a controller (116), operational data (132) from an operational data source (130);
determining, by the controller, whether to operate a low spool motor-generator (76) in a generator mode or a motor mode and whether to push power from the low spool motor-generator to a high spool motor-generator (78) based on the operational data;
determining, by the controller, whether to operate the high spool motor-generator in the generator mode or the motor mode and whether to push power from the high spool motor-generator to the low spool motor-generator based on the operational data;
commanding, by the controller, the low spool motor-generator to operate in at least one of the motor mode, the generator mode, or a push power mode; and
commanding, by the controller, the high spool motor-generator to operate in at least one of the motor mode, the generator mode, or the push power mode,
**characterised in that** receiving, by the controller, the operational data from the operational data source comprises receiving, by the controller, a throttle position signal; and
wherein determining, by the controller, whether to push power from the low spool motor-generator to the high spool motor-generator comprises at least one of:
comparing, by the controller, a velocity of a change in throttle position to a threshold throttle change velocity, wherein the controller is configured to command the low spool motor-generator to operate in the push power mode in response to determining the velocity of the change in throttle position is greater than the threshold throttle change velocity; or
comparing, by the controller, a difference between a voltage of the low spool motor-generator and a voltage of the high spool motor-generator to a threshold voltage difference, wherein the controller is configured to command the low spool motor-generator to operate in the push power mode in response to determining the difference between the voltage of the low spool motor-generator and the voltage of the high spool motor-generator is greater than the threshold voltage difference, and the controller is configured to command the high spool motor-generator to operate in the push power mode in response to determining the difference between the voltage of the low spool motor-generator and the voltage of the high spool motor-generator is less than negative of the threshold voltage difference.

12. The method (200) of claim 11,
further comprising identifying, by the controller (116), a snap acceleration; and
commanding, by the controller, the low spool motor-generator (76) to operate in the push power mode in response to identifying the snap acceleration; and/or further comprising:
identifying, by the controller, a cruise condition; and
commanding, by the controller, the low spool motor-generator to operate in the push power mode in response to identifying the cruise condition.

13. The method (200) of claim 11 or 12,
further comprising:
receiving, by the controller (116), a load demand from an aircraft system; and
comparing, by the controller, the load demand to a threshold load, wherein the controller is configured to command both the low spool motor-generator (76) and the high spool motor-generator (78) to operate in the generator mode in response to determining the load demand is greater than the threshold load.

14. The method (200) of claim 11, 12 or 13,
wherein receiving, by the controller (116), the operational data (132) from the operational data source (130) comprises receiving, by the controller, a fan inlet temperature; and
wherein determining, by the controller, whether to push power from the high spool motor-generator (78) to the low spool motor-generator (76) comprises comparing, by the controller, the fan inlet temperature to a threshold fan inlet temperature, wherein the controller is configured to command the high spool motor-generator to operate in the push power mode in response to determining the fan inlet temperature is greater than the threshold fan inlet temperature.

15. The method (200) of any of claims 11 to 14, wherein receiving, by the controller (116), the operational data (132) from the operational data source (130) comprises receiving, by the controller, a fan inlet temperature and a combustor outlet temperature; and
wherein determining, by the controller, whether to push power from the high spool motor-generator (78) to the low spool motor-generator (76) comprises comparing, by the controller, a ratio of the fan inlet temperature to the combustor outlet temperature to a threshold fan-inlet-temperature-to-combustor-outlet-temperature ratio, wherein the controller is configured to command the high spool motor-generator to operate in the push power mode in response to determining the ratio of the fan inlet temperature to the combustor outlet temperature is less than the threshold fan-inlet-temperature-to-combustor-outlet-temperature ratio.

## Patentansprüche

1. Leistungsextraktionssystem (100) für ein Gasturbinentriebwerk (20), umfassend:
ein Getriebe (72) der Niedergeschwindigkeitswelle;
ein Getriebe (74) der Hochgeschwindigkeitswelle;
einen Motor-Generator (76) der Niedergeschwindigkeitswelle, der mechanisch mit dem Getriebe der Niedergeschwindigkeitswelle verbunden ist; und
einen Motor-Generator der Hochgeschwindigkeitswelle (78), der mechanisch mit dem Getriebe der Hochgeschwindigkeitswelle und elektrisch mit dem Motor-Generator der Niedergeschwindigkeitswelle verbunden ist;
eine Steuerung (116), die zum Überwachen und Steuern des Betriebs des Motor-Generators der Niedergeschwindigkeitswelle und des Motor-Generators der Hochgeschwindigkeitswelle basierend auf von einer oder mehreren Betriebsdatenquellen (130) empfangenen Betriebsdaten (132) konfiguriert ist,
**dadurch gekennzeichnet, dass** die Steuerung als Reaktion darauf, dass die Geschwindigkeit der Änderung der Drosselklappenposition größer ist als ein Schwellenwert für die Geschwindigkeit der Änderung der Drosselklappe zum Ansteuern des Motor-Generators der Niedergeschwindigkeitswelle zum Zuführen von Leistung zu dem Motor-Generator der Hochgeschwindigkeitswelle konfiguriert ist; und/oder
wobei die Steuerung als Reaktion auf das Bestimmen, dass die Differenz der Spannung des Motor-Generators der Niedergeschwindigkeitswelle verglichen mit einer Spannung des Motor-Generators der Hochgeschwindigkeitswelle größer ist als der Schwellenwert für die Spannungsdifferenz, zum Ansteuern des Motor-Generators der Niedergeschwindigkeitswelle zum Betreiben in dem Leistungszuführungsmodus konfiguriert ist und die Steuerung als Reaktion auf das Bestimmen, dass die Differenz der Spannung des Motor-Generators der Niedergeschwindigkeitswelle verglichen mit einer Spannung des Motor-Generators der Hochgeschwindigkeitswelle kleiner ist als ein Negativwert des Schwellenwerts für die Spannungsdifferenz, zum Ansteuern des Motor-Generators der Hochgeschwindigkeitswelle zum Betreiben in dem Leistungszuführungsmodus konfiguriert ist.

2. Leistungsextraktionssystem (100) nach Anspruch 1, wobei der Motor-Generator (76) der Niedergeschwindigkeitswelle zum Abgeben von durch Rotation des Getriebes (72) der Niedergeschwindigkeitswelle erzeugter Leistung in den Motor-Generator (78) der Hochgeschwindigkeitswelle konfiguriert ist.

3. Leistungsextraktionssystem (100) nach Anspruch 1 oder 2, wobei der Motor-Generator (78) der Hochgeschwindigkeitswelle zum Abgeben von durch Rotation des Getriebes (74) der Hochgeschwindigkeitswelle erzeugter Leistung in den Motor-Generator (76) der Niedergeschwindigkeitswelle konfiguriert ist.

4. Leistungsextraktionssystem (100) nach einem der vorhergehenden Ansprüche, wobei die Steuerung (116) als Reaktion auf mindestens eines davon, dass eine Fan-Einlasstemperatur größer ist als ein Schwellenwert für die Fan-Einlasstemperatur oder ein Verhältnis der Fan-Einlasstemperatur zu einer Brennkammer-Auslasstemperatur kleiner ist als ein Schwellenwert für das Verhältnis von Fan-Einlasstemperatur zu Brennkammer-Auslasstemperatur, zum Ansteuern des Motor-Generators (78) der Hochgeschwindigkeitswelle zum Zuführen von Leistung zu dem Motor-Generator (76) der Niedergeschwindigkeitswelle konfiguriert ist.

5. Leistungsextraktionssystem (100) nach einem der vorhergehenden Ansprüche, wobei die Steuerung (116) zum Bestimmen basierend auf von einer Betriebsdatenquelle (130) empfangenen Betriebsdaten (132) konfiguriert ist, ob der Motor-Generator (76) der Niedergeschwindigkeitswelle zum Zuführen von Leistung zu dem Motor-Generator (78) der Hochgeschwindigkeitswelle anzusteuern ist.

6. Leistungsextraktionssystem (100) nach einem der vorhergehenden Ansprüche, wobei die Steuerung (116) als Reaktion auf das Erkennen eines Reiseflugzustands zum Ansteuern des Motor-Generators (76) der Niedergeschwindigkeitswelle zum Zuführen von Leistung zu dem Motor-Generator (78) der Hochgeschwindigkeitswelle konfiguriert ist.

7. Leistungsextraktionssystem (100) nach einem der vorhergehenden Ansprüche, ferner umfassend:
einen ersten Getriebezug (102), der rotierbar zwischen dem Getriebe (72) der Niedergeschwindigkeitswelle und dem Motor-Generator (76) der Niedergeschwindigkeitswelle gekoppelt ist; und
einen zweiten Getriebezug (104), der rotierbar zwischen dem Getriebe (74) der Hochgeschwindigkeitswelle und dem Motor-Generator (78) der Hochgeschwindigkeitswelle gekoppelt ist.

8. Herstellungsgegenstand, beinhaltend ein physisches, nichttransitorisches, computerlesbares Speichermedium, das darauf gespeicherte Anweisungen zum Steuern eines Leistungsextraktionssystems (100) eines Gasturbinentriebwerks (20) aufweist und das als Reaktion auf eine Ausführung durch eine Steuerung (116) die Steuerung zum Durchführen von Vorgängen veranlasst, umfassend:
Empfangen von Betriebsdaten (132) von einer Betriebsdatenquelle (130) durch die Steuerung;
Bestimmen durch die Steuerung basierend auf den Betriebsdaten, ob ein Motor-Generator (76) der Niedergeschwindigkeitswelle in einem Generatormodus oder einem Motormodus zu betreiben ist und ob einem Motor-Generator (78) der Hochgeschwindigkeitswelle Leistung von dem Motor-Generator der Niedergeschwindigkeitswelle zuzuführen ist;
Bestimmen durch die Steuerung basierend auf den Betriebsdaten, ob der Motor-Generator der Hochgeschwindigkeitswelle in dem Generatormodus oder dem Motormodus zu betreiben ist und ob dem Motor-Generator der Niedergeschwindigkeitswelle Leistung von dem Motor-Generator der Hochgeschwindigkeitswelle zuzuführen ist;
Ansteuern des Motor-Generators der Niedergeschwindigkeitswelle durch die Steuerung zum Betreiben in mindestens einem von dem Motormodus, dem Generatormodus oder einem Leistungszuführungsmodus; und
Ansteuern des Motor-Generators der Hochgeschwindigkeitswelle durch die Steuerung zum Betreiben in mindestens einem von dem Motormodus, dem Generatormodus oder dem Leistungszuführungsmodus,
**dadurch gekennzeichnet, dass** Empfangen der Betriebsdaten von der Betriebsdatenquelle durch die Steuerung Empfangen eines Drosselklappenpositionssignals durch die Steuerung umfasst; und
wobei Bestimmen durch die Steuerung, ob dem Motor-Generator der Hochgeschwindigkeitswelle Leistung von dem Motor-Generator der Niedergeschwindigkeitswelle zuzuführen ist, mindestens eines der Folgenden umfasst:
Vergleichen einer Geschwindigkeit einer Änderung der Drosselklappenposition mit einem Schwellenwert für die Geschwindigkeit der Änderung der Drosselklappe durch die Steuerung, wobei die Steuerung als Reaktion auf das Bestimmen, dass die Geschwindigkeit der Änderung der Drosselklappenposition größer ist als der Schwellenwert für die Geschwindigkeit der Änderung der Drosselklappe, zum Ansteuern des Motor-Generators der Niedergeschwindigkeitswelle zum Betreiben in dem Leistungszuführungsmodus konfiguriert ist; oder
Vergleichen einer Differenz zwischen einer Spannung des Motor-Generators der Niedergeschwindigkeitswelle und einer Spannung des Motor-Generators der Hochgeschwindigkeitswelle mit einem Schwellenwert für die Spannungsdifferenz durch die Steuerung, wobei die Steuerung als Reaktion auf das Bestimmen, dass die Differenz zwischen der Spannung des Motor-Generators der Niedergeschwindigkeitswelle und der Spannung des Motor-Generators der Hochgeschwindigkeitswelle größer ist als der Schwellenwert für die Spannungsdifferenz, zum Ansteuern des Motor-Generators der Niedergeschwindigkeitswelle zum Betreiben in dem Leistungszuführungsmodus konfiguriert ist und die Steuerung als Reaktion auf das Bestimmen, dass die Differenz zwischen der Spannung des Motor-Generators der Niedergeschwindigkeitswelle und der Spannung des Motor-Generators der Hochgeschwindigkeitswelle kleiner ist als ein Negativwert des Schwellenwerts für die Spannungsdifferenz, zum Ansteuern des Motor-Generators der Hochgeschwindigkeitswelle zum Betreiben in dem Leistungszuführungsmodus konfiguriert ist.

9. Gegenstand nach Anspruch 8, wobei Bestimmen durch die Steuerung (116), ob dem Motor-Generator (78) der Hochgeschwindigkeitswelle Leistung von dem Motor-Generator (76) der Niedergeschwindigkeitswelle zuzuführen ist, Bestimmen durch die Steuerung umfasst, ob das Gasturbinentriebwerk (20) in einem Reiseflugzustand betrieben wird, und wobei die Steuerung als Reaktion auf das Erkennen des Reiseflugzustands zum Ansteuern des Motor-Generators der Niedergeschwindigkeitswelle zum Betreiben in dem Leistungszuführungsmodus konfiguriert ist.

10. Gegenstand nach Anspruch 8 oder 9, wobei die Vorgänge ferner Folgendes umfassen:
Empfangen einer Lastanforderung von einem Luftfahrzeugsystem durch die Steuerung (116); und
Vergleichen der Lastanforderung mit einer Schwellenlast durch die Steuerung, wobei die Steuerung als Reaktion auf das Bestimmen, dass die Lastanforderung größer ist als die Schwellenlast, zum Ansteuern sowohl des Motor-Generators (76) der Niedergeschwindigkeitswelle als auch des Motor-Generators (78) der Hochgeschwindigkeitswelle zum Betreiben im GeneratorModus konfiguriert ist.

11. Verfahren (200) zum Steuern eines Leistungsextraktionssystems (100) eines Gasturbinentriebwerks (20), umfassend:
Empfangen von Betriebsdaten (132) von einer Betriebsdatenquelle (130) durch eine Steuerung (116);
Bestimmen durch die Steuerung basierend auf den Betriebsdaten, ob ein Motor-Generator (76) der Niedergeschwindigkeitswelle in einem Generatormodus oder einem Motormodus zu betreiben ist und ob einem Motor-Generator (78) der Hochgeschwindigkeitswelle Leistung von dem Motor-Generator der Niedergeschwindigkeitswelle zuzuführen ist;
Bestimmen durch die Steuerung basierend auf den Betriebsdaten, ob der Motor-Generator der Hochgeschwindigkeitswelle in dem Generatormodus oder dem Motormodus zu betreiben ist und ob dem Motor-Generator der Niedergeschwindigkeitswelle Leistung von dem Motor-Generator der Hochgeschwindigkeitswelle zuzuführen ist;
Ansteuern des Motor-Generators der Niedergeschwindigkeitswelle durch die Steuerung zum Betreiben in mindestens einem von dem Motormodus, dem Generatormodus oder einem Leistungszuführungsmodus; und
Ansteuern des Motor-Generators der Hochgeschwindigkeitswelle durch die Steuerung zum Betreiben in mindestens einem von dem Motormodus, dem Generatormodus oder dem Leistungszuführungsmodus,
**dadurch gekennzeichnet, dass** Empfangen der Betriebsdaten von der Betriebsdatenquelle durch die Steuerung Empfangen eines Drosselklappenpositionssignals durch die Steuerung umfasst; und
wobei Bestimmen durch die Steuerung, ob dem Motor-Generator der Hochgeschwindigkeitswelle Leistung von dem Motor-Generator der Niedergeschwindigkeitswelle zuzuführen ist, mindestens eines der Folgenden umfasst:
Vergleichen einer Geschwindigkeit einer Änderung der Drosselklappenposition mit einem Schwellenwert für die Geschwindigkeit der Änderung der Drosselklappe durch die Steuerung, wobei die Steuerung als Reaktion auf das Bestimmen, dass die Geschwindigkeit der Änderung der Drosselklappenposition größer ist als der Schwellenwert für die Geschwindigkeit der Änderung der Drosselklappe, zum Ansteuern des Motor-Generators der Niedergeschwindigkeitswelle zum Betreiben in dem Leistungszuführungsmodus konfiguriert ist; oder
Vergleichen einer Differenz zwischen einer Spannung des Motor-Generators der Niedergeschwindigkeitswelle und einer Spannung des Motor-Generators der Hochgeschwindigkeitswelle mit einem Schwellenwert für die Spannungsdifferenz durch die Steuerung, wobei die Steuerung als Reaktion auf das Bestimmen, dass die Differenz zwischen der Spannung des Motor-Generators der Niedergeschwindigkeitswelle und der Spannung des Motor-Generators der Hochgeschwindigkeitswelle größer ist als der Schwellenwert für die Spannungsdifferenz, zum Ansteuern des Motor-Generators der Niedergeschwindigkeitswelle zum Betreiben in dem Leistungszuführungsmodus konfiguriert ist und die Steuerung als Reaktion auf das Bestimmen, dass die Differenz zwischen der Spannung des Motor-Generators der Niedergeschwindigkeitswelle und der Spannung des Motor-Generators der Hochgeschwindigkeitswelle kleiner ist als ein Negativwert des Schwellenwerts für die Spannungsdifferenz, zum Ansteuern des Motor-Generators der Hochgeschwindigkeitswelle zum Betreiben in dem Leistungszuführungsmodus konfiguriert ist.

12. Verfahren (200) nach Anspruch 11,
ferner umfassend Erkennen einer plötzlichen Beschleunigung durch die Steuerung (116); und
Ansteuern des Motor-Generators (76) der Niedergeschwindigkeitswelle durch die Steuerung als Reaktion auf das Erkennen der plötzlichen Beschleunigung zum Betreiben in dem Leistungszuführungsmodus; und/oder ferner umfassend:
Erkennen eines Reiseflugzustands durch die Steuerung; und
Ansteuern des Motor-Generators der Niedergeschwindigkeitswelle durch die Steuerung als Reaktion auf das Erkennen des Reiseflugzustands zum Betreiben in dem Leistungszuführungsmodus.

13. Verfahren (200) nach Anspruch 11 oder 12,
ferner umfassend:
Empfangen einer Lastanforderung von einem Luftfahrzeugsystem durch die Steuerung (116); und
Vergleichen der Lastanforderung mit einer Schwellenlast durch die Steuerung, wobei die Steuerung als Reaktion auf das Bestimmen, dass die Lastanforderung größer ist als die Schwellenlast, zum Ansteuern sowohl des Motor-Generators (76) der Niedergeschwindigkeitswelle als auch des Motor-Generators (78) der Hochgeschwindigkeitswelle zum Betreiben im GeneratorModus konfiguriert ist.

14. Verfahren (200) nach Anspruch 11, 12 oder 13,
wobei Empfangen der Betriebsdaten (132) von der Betriebsdatenquelle (130) durch die Steuerung (116) Empfangen einer Fan-Einlasstemperatur durch die Steuerung umfasst; und
wobei Bestimmen durch die Steuerung, ob dem Motor-Generator (76) der Niedergeschwindigkeitswelle Leistung von dem Motor-Generator (78) der Hochgeschwindigkeitswelle zuzuführen ist, Vergleichen der Fan-Einlasstemperatur mit einem Schwellenwert für die Fan-Einlasstemperatur durch die Steuerung umfasst, wobei die Steuerung als Reaktion auf das Bestimmen, dass die Fan-Einlasstemperatur größer ist als der Schwellenwert für die Fan-Einlasstemperatur, zum Ansteuern des Motor-Generators der Hochgeschwindigkeitswelle zum Betreiben in dem Leistungszuführungsmodus konfiguriert ist.

15. Verfahren (200) nach einem der Ansprüche 11 bis 14, wobei Empfangen der Betriebsdaten (132) von der Betriebsdatenquelle (130) durch die Steuerung (116) Empfangen einer Fan-Einlasstemperatur und einer Brennkammer-Auslasstemperatur durch die Steuerung umfasst; und
wobei Bestimmen durch die Steuerung, ob dem Motor-Generator (76) der Niedergeschwindigkeitswelle Leistung von dem Motor-Generator (78) der Hochgeschwindigkeitswelle zuzuführen ist, Vergleichen eines Verhältnisses der Fan-Einlasstemperatur zu der Brennkammer-Auslasstemperatur mit einem Schwellenwert für das Verhältnis von Fan-Einlasstemperatur zu Brennkammer-Auslasstemperatur durch die Steuerung umfasst, wobei die Steuerung als Reaktion auf das Bestimmen, dass das Verhältnis von Fan-Einlasstemperatur zu Brennkammer-Auslasstemperatur kleiner ist als der Schwellenwert für das Verhältnis von Fan-Einlasstemperatur zu Brennkammer-Auslasstemperatur, zum Ansteuern des Motor-Generators der Hochgeschwindigkeitswelle zum Betreiben in dem Leistungszuführungsmodus konfiguriert ist.

## Revendications

1. Système d'extraction de puissance (100) pour un moteur à turbine à gaz (20), comprenant :
une transmission de corps inférieur (72) ;
une transmission de corps supérieur (74) ;
un moteur-générateur de corps inférieur (76) relié mécaniquement à la transmission de corps inférieur ; et
un moteur-générateur de corps supérieur (78) relié mécaniquement à la transmission de corps supérieur et connecté électriquement au moteur-générateur de corps inférieur ;
un dispositif de commande (116) configuré pour surveiller et commander le fonctionnement du moteur-générateur de corps inférieur et du moteur-générateur de corps supérieur sur la base de données opérationnelles (132) reçues à partir d'une ou plusieurs sources de données opérationnelles (130),
**caractérisé en ce que** le dispositif de commande est configuré pour commander le moteur-générateur de corps inférieur pour pousser de la puissance vers le moteur-générateur de corps supérieur en réponse à la vitesse d'une variation de position de manette de poussée qui est supérieure à une vitesse seuil de variation de manette de poussée ; et/ou
dans lequel le dispositif de commande est configuré pour commander le moteur-générateur de corps inférieur pour fonctionner dans le mode de puissance poussée en réponse à la détermination du fait que la différence entre une tension du moteur-générateur de corps inférieur et une tension du moteur-générateur de corps supérieur est supérieure à la différence de tension seuil, et le dispositif de commande est configuré pour commander le moteur-générateur de corps supérieur pour fonctionner dans le mode de puissance poussée en réponse à la détermination du fait que la différence entre une tension du moteur-générateur de corps inférieur et une tension du moteur-générateur de corps supérieur est inférieure à la différence de tension seuil.

2. Système d'extraction de puissance (100) selon la revendication 1, dans lequel le moteur-générateur de corps inférieur (76) est configuré pour délivrer en sortie de la puissance générée par la rotation de la transmission de corps inférieur (72) au moteur-générateur de corps supérieur (78).

3. Système d'extraction de puissance (100) selon la revendication 1 ou 2, dans lequel le moteur-générateur de corps supérieur (78) est configuré pour délivrer en sortie de la puissance générée par la rotation de la transmission de corps supérieur (74) au moteur-générateur de corps inférieur (76).

4. Système d'extraction de puissance (100) selon l'une quelconque revendication précédente, dans lequel le dispositif de commande (116) est configuré pour commander le moteur-générateur de corps supérieur (78) pour pousser de la puissance vers le moteur-générateur de corps inférieur (76) en réponse à au moins l'un d'une température d'entrée de soufflante qui est supérieure à une température seuil d'entrée de soufflante ou d'un rapport entre la température d'entrée de soufflante et une température de sortie de dispositif combustor qui est inférieur à un rapport seuil entre température d'entrée de soufflante et température de sortie de dispositif combustor.

5. Système d'extraction de puissance (100) selon l'une quelconque revendication précédente, dans lequel le dispositif de commande (116) est configuré pour déterminer s'il faut commander au moteur-générateur de corps inférieur (76) pour pousser de la puissance vers le moteur-générateur de corps supérieur (78) sur la base de données opérationnelles (132) reçues à partir d'une source de données opérationnelles (130).

6. Système d'extraction de puissance (100) selon l'une quelconque revendication précédente, dans lequel le dispositif de commande (116) est configuré pour commander le moteur-générateur de corps inférieur (76) pour pousser de la puissance vers le moteur-générateur de corps supérieur (78) en réponse à l'identification d'une condition de croisière.

7. Système d'extraction de puissance (100) selon l'une quelconque revendication précédente, comprenant en outre :
un premier réducteur d'hélice (102) couplé de manière rotative entre la transmission de corps inférieur (72) et le moteur-générateur de corps inférieur (76) ; et
un second réducteur d'hélice (104) couplé de manière rotative entre la transmission de corps supérieur (74) et le moteur-générateur de corps supérieur (78).

8. Article de fabrication comportant un support de stockage lisible par ordinateur non transitoire tangible sur lequel sont stockées des instructions destinées à commander un système d'extraction de puissance (100) d'un moteur à turbine à gaz (20) et qui, en réponse à l'exécution par le dispositif de commande (116), amènent le dispositif de commande à effectuer des opérations comprenant :
la réception, par le dispositif de commande, de données opérationnelles (132) à partir d'une source de données opérationnelles (130) ;
la détermination, par le dispositif de commande, de la nécessité de faire fonctionner un moteur-générateur de corps inférieur (76) dans un mode de générateur ou un mode de moteur et de la nécessité de pousser de la puissance à partir du moteur-générateur de corps inférieur vers un moteur-générateur de corps supérieur (78) sur la base des données opérationnelles ;
la détermination, par dispositif de commande, de la nécessité de faire fonctionner le moteur-générateur de corps supérieur dans le mode de générateur ou le mode de moteur et de la nécessité de pousser de la puissance à partir du moteur-générateur de corps supérieur vers le moteur-générateur de corps inférieur sur la base des données opérationnelles ;
la commande, par le dispositif de commande, du moteur-générateur de corps inférieur dans au moins l'un parmi le mode de moteur, le mode de générateur ou un mode de puissance de poussée ; et
la commande, par le dispositif de commande, du moteur-générateur de corps supérieur dans au moins l'un parmi le mode de moteur, le mode de générateur ou le mode de puissance de poussée,
**caractérisé en ce que** la réception, par le dispositif de commande, des données opérationnelles à partir de la source de données opérationnelles comprend la réception, par le dispositif de commande, d'un signal de position de manette de poussée ; et
dans lequel la détermination, par le dispositif de commande, de la nécessité de pousser de la puissance à partir du moteur-générateur de corps inférieur vers le moteur-générateur de corps supérieur comprend au moins l'une de :
la comparaison, par le dispositif de commande, d'une vitesse d'une variation de position de manette de poussée à une vitesse seuil de variation de manette de poussée, dans lequel le dispositif de commande est configuré pour commander le moteur-générateur de corps inférieur pour fonctionner dans le mode de puissance de poussée en réponse à la détermination du fait que la vitesse de la variation de position de manette de poussée est supérieure à la vitesse seuil de variation de manette de poussée ; ou
la comparaison, par le dispositif de commande, d'une différence entre une tension du moteur-générateur de corps inférieur et une tension du moteur-générateur de corps supérieur à une différence de tension seuil, dans lequel le dispositif de commande est configuré pour commander le moteur-générateur de corps inférieur pour fonctionner dans le mode de puissance poussée en réponse à la détermination du fait que la différence entre la tension du moteur-générateur de corps inférieur et la tension du moteur-générateur de corps supérieur est supérieure à la différence de tension seuil, et le dispositif de commande est configuré pour commander le moteur-générateur de corps supérieur pour fonctionner dans le mode de puissance poussée en réponse à la détermination du fait que la différence entre la tension du moteur-générateur de corps inférieur et la tension du moteur-générateur de corps supérieur est inférieure à la différence de tension seuil.

9. Article selon la revendication 8, dans lequel la détermination, par le dispositif de commande (116), de la nécessité de pousser de la puissance à partir du moteur-générateur de corps inférieur (76) vers le moteur-générateur de corps supérieur (78) comprend la détermination, par le dispositif de commande, du fait que le moteur à turbine à gaz (20) fonctionne dans une condition de croisière, et dans lequel le dispositif de commande est configuré pour commander le moteur-générateur de corps inférieur pour fonctionner dans le mode de puissance de poussée en réponse à l'identification de la condition de croisière.

10. Article selon la revendication 8 ou 9, dans lequel les opérations comprennent en outre :
la réception, par le dispositif de commande (116), d'une demande de charge à partir d'un système d'aéronef ; et
la comparaison, par le dispositif de commande, de la demande de charge à une charge seuil, dans lequel le dispositif de commande est configuré pour commander à la fois le moteur-générateur de corps inférieur (76) et le moteur-générateur de corps supérieur (78) pour fonctionner dans le mode de générateur en réponse à la détermination du fait que la demande de charge est supérieure à la charge seuil.

11. Procédé (200) de commande d'un système d'extraction de puissance (100) d'un moteur à turbine à gaz (20), comprenant :
la réception, par un dispositif de commande (116), de données opérationnelles (132) à partir d'une source de données opérationnelles (130) ;
la détermination, par le dispositif de commande, de la nécessité de faire fonctionner un moteur-générateur de corps inférieur (76) dans un mode de générateur ou un mode de moteur et de la nécessité de pousser de la puissance à partir du moteur-générateur de corps inférieur vers un moteur-générateur de corps supérieur (78) sur la base des données opérationnelles ;
la détermination, par dispositif de commande, de la nécessité de faire fonctionner le moteur-générateur de corps supérieur dans le mode de générateur ou le mode de moteur et de la nécessité de pousser de la puissance à partir du moteur-générateur de corps supérieur vers le moteur-générateur de corps inférieur sur la base des données opérationnelles ;
la commande, par le dispositif de commande, du moteur-générateur de corps inférieur dans au moins l'un parmi le mode de moteur, le mode de générateur ou un mode de puissance de poussée ; et
la commande, par le dispositif de commande, du moteur-générateur de corps supérieur dans au moins l'un parmi le mode de moteur, le mode de générateur ou le mode de puissance de poussée,
**caractérisé en ce que** la réception, par le dispositif de commande, des données opérationnelles à partir de la source de données opérationnelles comprend la réception, par le dispositif de commande, d'un signal de position de manette de poussée ; et
dans lequel la détermination, par le dispositif de commande, de la nécessité de pousser de la puissance à partir du moteur-générateur de corps inférieur vers le moteur-générateur de corps supérieur comprend au moins l'une de :
la comparaison, par le dispositif de commande, d'une vitesse d'une variation de position de manette de poussée à une vitesse seuil de variation de manette de poussée, dans lequel le dispositif de commande est configuré pour commander le moteur-générateur de corps inférieur pour fonctionner dans le mode de puissance de poussée en réponse à la détermination du fait que la vitesse de la variation de position de manette de poussée est supérieure à la vitesse seuil de variation de manette de poussée ; ou
la comparaison, par le dispositif de commande, d'une différence entre une tension du moteur-générateur de corps inférieur et une tension du moteur-générateur de corps supérieur à une différence de tension seuil, dans lequel le dispositif de commande est configuré pour commander le moteur-générateur de corps inférieur pour fonctionner dans le mode de puissance poussée en réponse à la détermination du fait que la différence entre la tension du moteur-générateur de corps inférieur et la tension du moteur-générateur de corps supérieur est supérieure à la différence de tension seuil, et le dispositif de commande est configuré pour commander le moteur-générateur de corps supérieur pour fonctionner dans le mode de puissance poussée en réponse à la détermination du fait que la différence entre la tension du moteur-générateur de corps inférieur et la tension du moteur-générateur de corps supérieur est inférieure à la différence de tension seuil.

12. Procédé (200) selon la revendication 11,
comprenant en outre l'identification, par le dispositif de commande (116), d'une accélération brusque ; et
la commande, par le dispositif de commande, du moteur-générateur de corps inférieur (76) pour fonctionner dans le mode de puissance de poussée en réponse à l'identification de l'accélération brusque ; et/ou comprenant en outre :
l'identification, par le dispositif de commande, d'une condition de croisière ; et
la commande, par le dispositif de commande, du moteur-générateur de corps inférieur pour fonctionner dans le mode de puissance de poussée en réponse à l'identification de la condition de croisière.

13. Procédé (200) selon la revendication 11 ou 12,
comprenant en outre :
la réception, par le dispositif de commande (116), d'une demande de charge à partir d'un système d'aéronef ; et
la comparaison, par le dispositif de commande, de la demande de charge à une charge seuil, dans lequel le dispositif de commande est configuré pour commander à la fois le moteur-générateur de corps inférieur (76) et le moteur-générateur de corps supérieur (78) pour fonctionner dans le mode de générateur en réponse à la détermination du fait que la demande de charge est supérieure à la charge seuil.

14. Procédé (200) selon la revendication 11, 12 ou 13,
dans lequel la réception, par le dispositif de commande (116), des données opérationnelles (132) à partir de la source de données opérationnelles (130) comprend la réception, par le dispositif de commande, d'une température d'entrée de soufflante ; et
dans lequel la détermination, par le dispositif de commande, de la nécessité de pousser de la puissance à partir du moteur-générateur de corps supérieur (78) vers le moteur-générateur de corps inférieur (76) comprend la comparaison, par le dispositif de commande, de la température d'entrée de soufflante à une température seuil d'entrée de soufflante, dans lequel le dispositif de commande est configuré pour commander le moteur-générateur de corps supérieur pour fonctionner dans le mode de puissance de poussée en réponse à la détermination du fait que la température d'entrée de soufflante est supérieure à la température seuil d'entrée de soufflante.

15. Procédé (200) selon l'une quelconque des revendications 11 à 14, dans lequel la réception, par le dispositif de commande (116), des données opérationnelles (132) à partir de la source de données opérationnelles (130) comprend la réception, par le dispositif de commande, d'une température d'entrée de soufflante et d'une température de sortie de dispositif combustor ; et
dans lequel la détermination, par le dispositif de commande, de la nécessité de pousser de la puissance à partir du moteur-générateur de corps supérieur (78) vers le moteur-générateur de corps inférieur (76) comprend la comparaison, par le dispositif de commande, d'un rapport entre la température d'entrée de soufflante et la température de sortie de dispositif combustor à un rapport seuil entre température d'entrée de soufflante et température de sortie de dispositif combustor, dans lequel le dispositif de commande est configuré pour commander le moteur-générateur de corps supérieur pour fonctionner dans le mode de poussée de puissance en réponse à la détermination du fait que le rapport entre la température d'entrée de soufflante et la température de sortie de dispositif combustor est inférieur au rapport seuil entre température d'entrée de soufflante et température de sortie de dispositif combustor.
